# EUROPEAN PATENT SPECIFICATION

(11) **EP 0 703 420 B1**
(45) Date of publication and mention of the grant of the patent: **11.04.2001**
(21) Application number: 95850163.7
(22) Date of filing: 19.09.1995
(51) Int. Cl.: F25B 11/02, F25B 25/02, F25B 41/00

(54) **Energy converter**
Energieumwandler
Convertisseur d'énergie

(30) Priority: 20.09.1994 JP 22491894
(43) Date of publication of application: 27.03.1996
(73) Proprietor: SAGA UNIVERSITY, Saga-City Saga Pref. (JP)
(72) Inventor: Ikegami, Yasuyuki, Saga City, Saga Pref. (JP); Uehara, Haruo, Saga City, Saga Pref. (JP)
(74) Representative: Hammond, Andrew David

(56) References cited:
- EP-A- 0 239 680
- EP-A- 0 301 503
- EP-A- 0 507 275
- US-A- 4 519 441
- PATENT ABSTRACTS OF JAPAN vol. 014, no. 469 (M-1034), 12 October 1990 & JP 02 187570 A (MATSUSHITA ELECTRIC IND CO LTD), 23 July 1990,
- PATENT ABSTRACTS OF JAPAN vol. 014, no. 135 (M-0949), 14 March 1990 & JP 02 004171 A (MATSUSHITA REFRIG CO LTD), 9 January 1990,

## Description

### TECHNICAL FIELD:

The present invention relates to an improvement in an energy converter for transferring thermal energy from a low heat source to a high heat source with the use of a mixed medium, for increasing the performance of transferring thermal energy of the above energy converter, improving the performance of an evaporator and a condenser, and reducing production costs of the converter. Moreover, the present invention improves the performance maintained over a wide range even in case of a partial load, and provides a highly efficient and multi-functional energy converter operating as a thermal power generator.

### BACKGROUND OF THE INVENTION:

In heat pumps and refrigerators of this kind for transferring thermal energy from a low heat source to a high heat source, hitherto, use has essentially been made of (1) a compression-type device with the use of a single component medium such as flon, ammonia and the like or an azeotropic mixed medium prepared by mixing various refrigerant carriers having the same boiling point (reverse Rankine cycle), (2) for the purpose of improving high performance for a reverse Rankine cycle, a compression-type device with the use of a non-azeotropic mixed medium prepared by mixing various refrigerant carriers having different boiling points (Lorentz cycle), (3) an absorption-type device (absorption cycle) combining a refrigerant carrier with an absorbent, such as ammonia with water, water with lithium bromide (LiBr) and the like.

In the known compression-type heat pump and refrigerator for carrying out a reverse Rankine cycle, the improvement of a coefficient of performance has a limit; particularly when the temperature change of a heat source is large, a coefficient of performance becomes small. In order to eliminate this shortcoming, there have been developed a compression-type heat pump and a refrigerator of the Lorentz cycle type with the use of a non azeotropic mixed medium prepared by mixing various refrigerant carriers having different boiling points. The compression-type heat pump and refrigerant of this cycle is based on the principle that temperature changes when a medium changes phase in an evaporator and a condenser, so that the temperature change with a heat source is matched, thereby increasing the effective energy in the evaporator and the condenser, and reducing the power of the compressor so as to largely increase a coefficient of performance.

However, the use of a non-azeotropic mixed medium disadvantageously lowers the heat transfer efficiency in the evaporator and the condenser, increases the condensation pressure, lowers the evaporation pressure and increases the power of the condenser. In particular, the lowering of this heat transfer efficiency obviously occurs at the outlet of the condenser. This is because an easily condensable high boiling point medium is first condensed in the condenser, and a hardly condensable low boiling point medium is to a high degree left at the outlet of the condenser. Therefore, a method of dividing a condenser into multiple stages, separating a medium into a condensate condensed at each stage and vapor not condensed at each stage, condensing only the non-condensed vapor at a heat source again, and repeating these steps has been considered. However, even in this case, the concentration of a low boiling point medium is gradually increased in the non-condensed vapor, and if an attempt is made to completely condense the vapor at the heat source of a certain temperature, the condensation pressure is forced to become high. Therefore, it is disadvantageous that the power of the compressor cannot sufficiently be lowered, and the same also happens in the evaporator.

In an absorption-type heat pump and refrigerator, a coefficient of performance becomes small as compared with the above compression-type device. In this connection, a multiple-effect absorption cycle, GAX (Generator-Absorber-Heat Exchanger Cycle) for reducing the heating capacity of a regenerator by using part of the exhaust heat of an absorber for heating the regenerator, a triple cycle and the like have been studied and developed, but a higher coefficient of performance than that of the above compression-type device cannot be obtained.

Furthermore, a compression-absorption-type hybrid device combining a compression-type device with an absorption-type device has been studied and developed, but the above point remains, that is, a problem of lowering performance of the condenser and the evaporator in case of using a mixed medium, and there is no expectation of a high performance and compactness of the apparatus.

On the other hand, a partial load in the prior heat pump and refrigerator is controlled by controlling the circulating amount of a working medium and further controlling the composition in case of using a mixed medium. However, substantial problems include a lowering performance due to a change of the circulating amount, difficult composition control, enlarged apparatus and the like.

The document EP-A- 0 239 680 discloses a heat pump with an evaporator, a compressor, a condenser and an expansion valve. Said heat pump also comprises a vapor-liquid separator and an expansion turbine driven by vapor from the separator. The compressor is driven by said expansion turbine.

### SUMMARY OF THE INVENTION:

An object of the present invention is to provide an energy converter for removing the above described shortcomings in the prior art, improving a coefficient of performance of the heat pump and the refrigerator, maintaining performance at partial load within a wide range, and reducing installation costs.

A characteristic of the present invention is as follows.

The present invention relates to an energy converter according to claim 1.

The present invention also provides an embodiment of the energy converter according to claim 2.

As an embodiment of a working fluid in the present invention, use can be made of a fluid selected from a mixture of ammonia and water and a mixture of flon 32 and flon 134a. Flon 32 and flon 134a proposed for use here are fluids which do not destroy an ozone layer.

The energy converter mentioned in the present invention is an energy system for utilizing river water, underground water, air, solar heat, lake water, sea water, subterranean heat, warm drainage and steam discharged from factories, exhaust heat from thermal power stations and atomic power stations, exhaust heat from cities (sewage disposal plant, garbage disposal plant, transformer substation, underground town, subway, computer center, refrigerated warehouse, LNG, LPG, etc.) and the like.

For carrying out the present invention, an expansion turbine and the like is used as an expansion device. Moreover, it is characteristic to connect a generator to the expansion turbine, to generate electricity simultaneously with an energy conversion, and to increase the energy conversion efficiency. Furthermore, a compressor is connected to the expansion device, thereby utilizing revolving energy for revolution of the compressor so as to increase energy efficiency.

### BRIEF DESCRIPTION OF THE DRAWINGS:

- Fig. 1: shows an energy conversion cycle showing one embodiment of the present invention.
- Fig. 2: shows an energy conversion cycle showing another embodiment of the present invention.

Throughout different views of the drawings, 1 is a low heat source, 2 is a high heat source, 3 is a working fluid piping, 4 is an evaporator, 5 is a compressor, 6 is a condenser, 7 is a vapor liquid separator, 8 is a reducing valve, 9 is a mixer, 10 is an expansion device and 11 is a regenerator.

### DESCRIPTION OF THE PREFERRED EMBODIMENTS:

The preferred embodiment of the present invention is fully explained in detail by referring to the attached drawings.

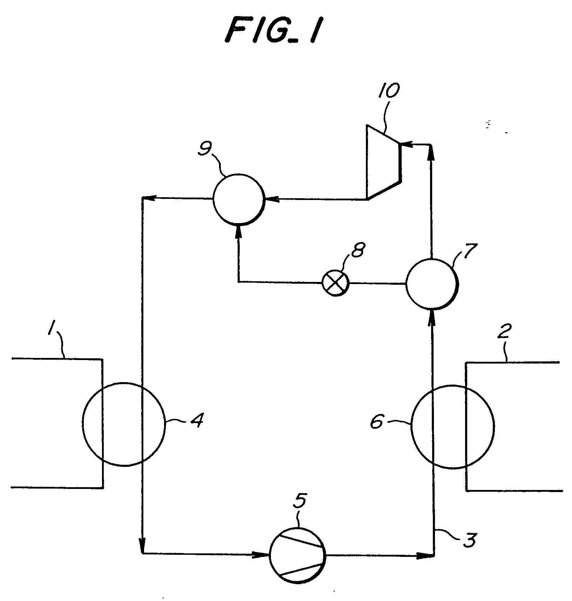

In Fig. 1, a way of connecting the piping is explained in detail. A low heat source 1 is connected to an evaporator 4 for thermal exchange between a low heat source 1 and a high heat source 2. The evaporator 4 is in turn connected to a compressor 5, a condenser 6 for thermal exchange with a high heat source 2 and a vapor-liquid separator 7 via working fluid piping 3 which passes through the evaporator 4. A vapor separated by the vapor-liquid separator 7 is connected to an expansion device 11 such as an expansion turbine by the piping 3. A discharge vapor of the expansion device 11 is sent to a mixer 9, whilst a discharge liquid from the vapor-liquid separator 7 is sent to the mixer 9 via a reducing valve 8 and the piping 31. Finally, a discharge material from the mixer 9 is sent to the evaporator 4 through the piping. Thus, Fig. 1 shows a cycle.

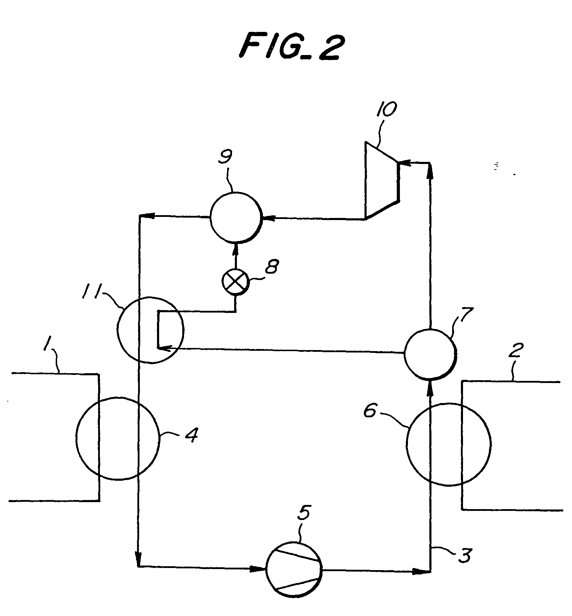

In operation, if so required by the circumstances, it is effective to provide a plurality of evaporators 4, condensers 6 and expansion devices 10. Moreover, as shown in Fig. 2, when a regenerator 11 is installed between a reducing valve 8 and a vapor-liquid separator 7 for recovering heat, heat recovery efficiency may effectively be increased.

In the illustrated embodiment, a working fluid vapor consisting of a mixture of 2-3 components having different boiling points is delivered to a condenser 6. The working fluid vapor of the mixture is thermally exchanged in a high heat source 2 at the condenser 6, condensed to a two-phase state before a complete condensation state, and delivered into a vapor-liquid separator 7. The vapor-liquid separator 7 separates the mixture into vapor and liquid, the liquid is delivered to a reducing valve 8 and the vapor is delivered to an expansion device 10. The liquid of this mixture is pressure reduced at the reducing valve 8 and thereafter delivered to a mixer 9. On the other hand, the vapor of the mixture is worked at the expansion device, thereafter delivered to the mixer and mixed with the pressure reduced liquid in the reducing valve 8. The liquid of the mixture left from the mixer 9 is sent to an evaporator 4, thermally exchanged in a low heat source 1 and evaporated. The vapor of this mixture is again sent to the condenser 6 by the compressor 5.

Without completely condensing vapor of a low boiling point medium which to a great extent is at the back of a condenser as before, a vapor-liquid separator 7 is installed behind the condenser 6 for separating the vapor containing many low boiling point mediums from the liquid containing many high boiling point mediums. The vapor containing many low boiling point mediums is recovered as power by an expansion device 10, while the liquid containing many high boiling point mediums is reduced as it is by a reducing valve 8, or heat recovered by a regenerator 11 (as shown in Fig. 2). As a result, heat transfer performance of a condenser 6 and an evaporator 4 is increased, and the device can be made compact.

As a preferred embodiment of the working fluid of this device, mention may be made of a mixture of ammonia and water and a mixture of flon 32 and flon 134a. The optimum mixing ratio depends on the temperature and pressure to be utilized. In case of a mixture of ammonia and water, the higher the temperature to be utilized, the higher the water mixing ratio. In case of a mixture of flon 32 and flon 134a, the higher the temperature to be utilized, the higher the flon 134a mixing ratio. Concerning the mixture of ammonia and water and the mixture of flon 32 and flon 134a, the mixture of ammonia and water can be adapted up to a higher temperature range in comparison with the mixture of flon 32 and flon 134a.

The power obtained by the expansion device 10 can be converted into electrical energy by attaching a generator to the expansion device 10, such as an expansion turbine. On the other hand, this electrical energy is utilized as a part of the electrical energy necessary for a compressor 5, and a coefficient of performance can be improved. Moreover, the power necessary for the compressor 5 can be reduced by connecting the expansion device 10 to the compressor 5, and a coefficient of performance can be improved. Moreover, it may be effective to provide an expansion device instead of a reducing valve 8.

A proportion of the vapor separated from the liquid of a mixture in the vapor-liquid separator 7 can be changed by changing the pressure, temperature, working fluid flow rate and vapor-liquid separation property of the vapor liquid separator 7. By changing this vapor-liquid separation rate, it is possible to control the rate of power W in the expansion device 10 to thermal load Q in the condenser 6 and the evaporator 4. That is, when the rate of the power W is expected to be large, the rate of the vapor separated in the vapor-liquid separator 7 may be decreased. On the other hand, in case of controlling the thermal load, the working fluid flow rate is not controlled as before, but it is possible to only change the separating rate of vapor to liquid in the vapor liquid separator 7 with respect to a certain flow rate. From this, it becomes possible to control the load without reducing the whole thermal efficiency with respect to the partial load within a wide range.

The device of the present invention is effectively utilized by (1) employing as a power source of a compressor 5 in the daytime air compressed cheaply using off-peak power, and generating electricity together with its function as a heat pump and a refrigerator, (2) effectively utilizing other energy and generating electricity together with operating a heat pump and a refrigerator for example utilizing vehicle engine power as a power source of the compressor 5, and generating electricity together with operating air conditioning in a car.

As is apparent from the above explanation, the present invention provides such remarkable effects by installing a vapor-liquid separator 7 behind a condenser 6 so that the vapor containing many low boiling point fluids is separated from the liquid containing many high boiling point fluids by the vapor-liquid separator 7, the vapor containing many low boiling point fluids being recovered as power by an expansion device 10, the liquid containing many high boiling point fluids being pressure reduced as it is by a reducing valve 8 or heat-recovered by a regenerator 11, thereby increasing heat transfer performance, and efficiency of an energy converter can be increased.

As an example, in a hitherto used heat pump of the Lorentz cycle type, with the use of a mixture of flon 32 and flon 134a, in case of high heat source inlet temperature 40°C, high heat source outlet temperature 60°C, low heat source inlet temperature 10°C, low heat source outlet temperature 20°C, heat transfer performance (heat pass coefficient-heat transfer area/heat exchange amount) 0.15 (l/K) at an evaporator 4, heat transfer performance 0.15 K at a condenser 6, and mass composition 0.2 kg/kg of flon 32, a coefficient of theoretical performance becomes substantially 4.7, while it becomes substantially 5.1 in the present device under the same conditions. In this case, a coefficient of performance increases about 8%.

Moreover, conventional heat pumps and refrigerators have problems such as system performance lowering in case of a partial load and the like, but according to the present invention, these problems can be improved by only controlling a separating rate at the vapor-liquid separator 7. This means that the flow rate of a working fluid is uniform, and only the separating rate at the vapor-liquid separator 7 is changed. When a ratio of thermal load Q is wanted to be small, a ratio of vapor separated at the separator 7 is increased.

When the ratio of thermal load Q is wanted to be large, the ratio of vapor separated at the separator 7 is reduced.

As an example, in the energy converter of the present invention, by using a mixture of flon 32 and flon 134a at high heat source inlet temperature of 40°C, high heat source outlet temperature of 60°C, low heat source inlet temperature of 10°C, low heat source outlet temperature 20°C, heat transfer efficiency of 0.15 K at an evaporator 4, heat transfer efficiency of 0.15 K at a condenser 6, and flon 32 mass composition of 0.5 kg/kg at the inlet of a separator 7, when a vapor-liquid separating rate (liquid mass/total inflow amount) at the separator is changed up to 0.1-0.8, and the thermal load at the outlet of the condenser is changed from 1 KW to 2.66 KW, the change of a coefficient of theoretical performance of the heat pump is slight and substantially constant.

## Claims

1. An energy converter comprising an evaporator (4) for heat-exchange between a low temperature heat source (1) and a working fluid, a compressor (5) connected to a fluid discharge side of the evaporator (4) for compressing a discharge fluid, a condenser (6) connected to a discharge side of the compressor (5) for thermal exchange between the working fluid discharged from the compressor (5) and a high temperature heat source (2), a vapor-liquid separator (7) connected to a discharge side of the condenser (6) and an expansion device (10) connected to a vapor discharge side of the vapor-liquid separator (7) for expansion of a discharged vapor, **characterized in** that it comprises a reducing valve (8) connected to a liquid discharge side of the vapor-liquid separator (7) for reducing the pressure of a liquid, and a mixer (9) or an absorber for mixing an expanded vapor from the expansion device (10) with a reduced liquid from the reducing valve (8), wherein the fluid from the mixer (9) or absorber is fed to the evaporator (4) and that the various components of the converter are connected by piping (3) and the vapor-liquid separation rate can be changed by changing the separation property of the vapor-liquid separator.

2. An energy converter as claimed in claim 1, **characterized in** that it further comprises a regenerator (11) for thermally exchanging discharge fluid of the mixer (9) or absorber with a discharge liquid of the vapor-liquid separator.

3. An energy converter as claimed in claim 1 or 2,
**characterized in** that the working fluid is selected from a mixture of ammonia and water and a mixture of flon 32 and flon 134a according to use.

4. An energy converter as claimed in claim 1 or 2,
**characterized in** that the expansion device (10) is an expansion turbine connected to a generator, and energy conversion and power generation are simultaneously carried out.

5. An energy converter as claimed in claim 1,
**characterized in** that a vapor containing many low boiling point mediums is separated from a liquid containing many high boiling point mediums by the vapor-liquid separator (7).

6. An energy converter as claimed in claim 4,
**characterized in** that the compressor (5) is partly driven by the expansion device (10).

## Patentansprüche

1. Ein Energiewandler umfassend einen Verdampfer (4) für einen Wärmeaustausch zwischen einer Niedertemperatur-Wärmequelle (1) und einem Arbeitsfluid, einen Kompressor (5), der mit einer Fluidabgabeseite des Verdampfers (4) verbunden ist, um ein Abgabefluid zu komprimieren, einen Kondenser (6), der mit einer Abgabeseite des Kompressors (5) verbunden ist, für einen thermischen Austausch zwischen dem von dem Kompressor (5) abgegebenen Arbeitsfluid und einer Hochtemperaturwärmequelle (2), einen Dampf-Flüssigkeits-Separator (7), der mit einer Abgabeseite des Kondensers (6) verbunden ist, und eine Expansionsvorrichtung (10), die mit einer Dampfabgabeseite des Dampf-Flüssigkeits-Separators (7) verbunden ist, für ein Expandieren eines abgegebenen Dampfes,
gekennzeichnet durch
ein Reduzierventil (8), das mit einer Flüssigkeitsabgabeseite des Dampf-Flüssigkeits-Separators (7) für ein Reduzieren des Druckes einer Flüssigkeit verbunden ist, und einen Mischer, oder einen Absorber zum Mischen eines expandierten Dampfes von der Expansionsvorrichtung (10) mit einer reduzierten Flüssigkeit von dem Reduktionsventil (8), wobei das Fluid vom Mischer (9) oder Absorber zu dem Verdampfer (4) geführt wird, und die verschiedenen Elemente des Wandlers durch Leitungen (3) verbunden sind, und die Dampf-Flüssigkeits-Trennrate geändert werden kann, indem die Trenneigenschaft des Dampf-Flüssigkeits-Separators geändert wird.

2. Ein Energiewandler nach Anspruch 1, dadurch gekennzeichnet, dass er weiter einen Regenerator (11) umfasst, für einen thermischen Austausch zwischen einem Abgabefluid des Mischers (9) oder Absorbers mit einer Abgabeflüssigkeit des Dampf-Flüssigkeits-Separators.

3. Ein Energiewandler nach Anspruch 1 oder 2, dadurch gekennzeichnet, dass das Arbeitsfluid aus einer Mischung von Ammonium und Wasser und einer Mischung von Flon 32 und Flon 134a in Übereinstimmung mit einer Nutzung ausgewählt ist.

4. Ein Energiewandler nach Anspruch 1 oder 2, dadurch gekennzeichnet, dass die Expansionsvorrichtung (10) eine Expansionsturbine ist, die mit einem Generator verbunden ist, und eine Energieumwandlung und Leistungserzeugung gleichzeitig durchgeführt werden.

5. Ein Energiewandler nach Anspruch 1, dadurch gekennzeichnet, dass ein Dampf, der viele Bestandteile mit niedrigem Siedepunkt enthält, von einer Flüssigkeit getrennt wird, die viele Bestandteile mit hohem Siedepunkt enthält, mittels dem Dampf-Flüssigkeits-Separator (7).

6. Ein Energiewandler nach Anspruch 4, dadurch gekennzeichnet, dass der Kompressor (5) teilweise durch die Expansionsvorrichtung (10) angetrieben wird.

## Revendications

1. Convertisseur d'énergie comportant un évaporateur (4) destiné à échanger de la chaleur entre une source (1) de chaleur à basse température et un fluide de travail, un compresseur (5) raccordé à un côté de décharge de fluide de l'évaporateur (4) pour comprimer un fluide de décharge, un condenseur (6) raccordé à un côté de décharge du compresseur (5) pour effectuer un échange thermique entre le fluide de travail déchargé du compresseur (5) et une source de chaleur (2) à haute température, un séparateur vapeur-liquide (7) raccordé à un côté de décharge du condenseur (6) et un dispositif d'expansion (10) raccordé à un côté de décharge de vapeur du séparateur vapeur-liquide (7) pour une expansion d'une vapeur déchargée, caractérisé en ce qu'il comporte un détendeur (8) raccordé à un côté de décharge de liquide du séparateur vapeur-liquide (7) pour abaisser la pression d'un liquide, et un mélangeur (9) ou un absorbeur destiné à mélanger une vapeur expansée provenant du dispositif d'expansion (10) avec un liquide détendu provenant du détendeur (8), le fluide provenant du mélangeur (9) ou de l'absorbeur étant amené à l'évaporateur (4) et en ce que les divers constituants du convertisseurs sont raccordés par une canalisation (3) et en ce que la vitesse de séparation vapeur-liquide peut être modifiée en modifiant la propriété de séparation du séparateur vapeur-liquide.

2. Convertisseur d'énergie selon la revendication 1, caractérisé en ce qu'il comporte en outre un régénérateur (11) destiné à réaliser un échange thermique entre le fluide de décharge du mélangeur (9) ou de l'absorbeur et un liquide de décharge du séparateur vapeur-liquide.

3. Convertisseur d'énergie selon la revendication 1 ou 2, caractérisé en ce que le fluide de travail est choisi entre un mélange d'ammoniaque et d'eau et un mélange de flon (32) et de flon (134a) selon l'utilisation.

4. Convertisseur d'énergie selon la revendication 1 ou 2, caractérisé en ce que le dispositif d'expansion (10) est une turbine à expansion raccordée à une génératrice, et une conversion d'énergie et une génération de puissance sont exécutées simultanément.

5. Convertisseur d'énergie selon la revendication 1, caractérisé en ce qu'une vapeur contenant de nombreux milieux à bas point d'ébullition est séparée d'un liquide contenant de nombreux milieux à haut point d'ébullition par le séparateur vapeur-liquide (7).

6. Convertisseur d'énergie selon la revendication 4, caractérisé en ce que le compresseur (5) est entraîné partiellement par le dispositif d'expansion (10).
